# EUROPÄISCHE PATENTSCHRIFT

(11) **EP 0 846 591 B1**
(45) Veröffentlichungstag und Bekanntmachung des Hinweises auf die Patenterteilung: **08.01.2003**
(21) Anmeldenummer: 97114962.0
(22) Anmeldetag: 29.08.1997
(51) Int. Cl.: B60N 2/28

(54) **Lösbare Befestigung von Kindersitzen an einem Fahrzeugsitz mit klappbarer Rückenlehne**
Detachable fastening of a child seat to a vehicle seat with tiltable backrest
Fixation amovible d'un siège d'enfant à un siège de véhicule à dossier rabattable

(30) Priorität: 03.12.1996 DE 19650087
(43) Veröffentlichungstag der Anmeldung: 10.06.1998
(73) Patentinhaber: Faurecia Autositze GmbH & Co. KG, 31655 Stadthagen (DE)
(72) Erfinder: Müller, Fritz, 71563 Affalterbach (DE)
(74) Vertreter: Brümmerstedt, Hans Dietrich, Dipl.-Ing.

(56) Entgegenhaltungen:
- EP-A- 0 537 019
- WO-A-93/14952
- DE-A- 4 216 925
- DE-A- 4 340 677

## Beschreibung

Die vorliegende Erfindung betrifft eine Vorrichtung zur lösbaren Befestigung von Gegenständen, insbesondere von Kindersitzen, an einem Fahrzeugsitz mit klappbarer Rückenlehne, wobei eine erste, sitzintegrierte Halterung mit einer zweiten Halterung am zu befestigenden Gegenstand zusammenwirkt.

Aus der gattungsgemäßen EP 0 537 019 A2 ist eine Einrichtung zur Halterung eines Kindersitzes auf einem Fahrzeugsitz bekannt. Diese Einrichtung besteht aus zwei Laschen, die aus dem zwischen der Rückenlehne und der Sitzfläche gebildeten Spalt ragen, und aus einer weiteren, mittig an der Unterkante der Sitzvorderseite angeordneten Lasche. Der Kindersitz besitzt an seiner Sitzvorderseite zwei Kopplungsteile sowie eine Halterung mit Kopplungsteil auf der Rückseite seiner Rückenlehne. Zur Befestigung wird der Kindersitz rücklings auf den Fahrzeugsitz gestellt und mit den auf seiner Vorderseite angeordneten Kopplungsteilen formschlüssig in die auf die Sitzfläche ragenden Laschen eingesteckt. Anschließend wird das Sitzkissen des Fahrzeugsitzes nach unten gedrückt und die an der Rückseite des Kindersitzes angeordnete Halterung mit seinem Kopplungsteil in die Lasche an der Vorderseite des Fahrzeugsitzes eingehängt. Nach dem Entspannen des Sitzkissens steht dieses Halterungsteil unter Vorspannung. Der entscheidende Nachteil dieser Befestigung ist darin zu sehen, daß die Halterung des Kindersitzes sehr schnell unwirksam werden kann, nämlich dann, wenn der Kindersitz bei starker Bremsverzögerung nach vorn nickt. Dadurch wird die Vorspannung aufgehoben und die vordere Haltung des Kindersitzes kann sich lösen.

In der DE 42 16 925 C2 ist eine weitere Vorrichtung zur lösbaren Halterung von Gegenständen auf einem Fahrzeugsitz offenbart. Hier sind links und rechts vom Sitz an üblichen Peitschen Gurtschlösser angebracht, die am Sitzrahmen befestigt sind, so daß sie bei Sitzverstellungen mitbewegt werden. Auf die Sitzfläche wird ein Auflageteil aufgelegt, welches im Bereich der Gurtschlösser nach unten ragende Laschen besitzt und ggf. mit einem Anlageteil für die Rückenlehne des Fahrzeugsitzes ausgestattet ist. Die Lage der Gurtschlösser und der Laschen ist dabei so gewählt, daß das Auflageteil und ggf. sein Anlageteil bei in die Gurtschlösser eingerasteten Laschen an der Sitzfläche bzw. Rükkenlehne anliegen. Bei einer vorteilhaften Ausführungsform sind die Gurtschlösser im Übergangsbereich zwischen der Rückenlehne und der Sitzfläche angeordnet und die Laschen entsprechend im Übergangsbereich vom Auflageteil zum Anlageteil. Letztere ragen von dort schräg nach hinten und unten. Durch diese Anordnung werden das Auflageteil und das Anlageteil bei Herstellung der Kopplung zwischen den Laschen und den Gurtschlössern in die Polsterung der Sitzfläche bzw. der Rückenlehne gezogen, so daß sie fest anliegen. Das Auflageteil kann integraler Bestandteil eines zu halternden Gegenstandes, z. B. eines Kindersitzes, sein. Da die Gurtschlösser links und rechts neben dem Sitz angeordnet sind, muß der Kindersitz wesentlich breiter als erforderlich ausgeführt werden, was z. B. für Systeme nachteilig ist, bei denen der Autokindersitz nicht nur im Auto, sondern auch als Sitzschale für einen Kinderwagen genutzt wird. Das Kinderwagen-Untergestell müßte in diesem Fall über Gebühr breit ausgeführt werden. Nachteilig ist weiterhin, daß die an den flexiblen Peitschen befestigten Gurtschlösser keine richtiggehend starre Verbindung mit dem Sitzrahmen darstellen und bei Nichtgebrauch störend in den Raum ragen.

In der DE 43 40 677 A1 wird vorgeschlagen, das Sitzkissen eines Fahrzeugsitzes zumindest teilweise ablösbar von dem darunterliegenden Sitzrahmen auszuführen. Der dann freiliegende Abschnitt des Sitzrahmens weist eine erste Halterung auf, die mit einer zweiten, mit dem zu befestigenden Gegenstand verbundenen Halterung zusammenwirkt. Diese Lösung hat den Vorteil, daß eine echte starre Verbindung zwischen dem steifen Sitzrahmen und dem zu befestigenden Gegenstand besteht. Das ist besonders dann von Vorteil, wenn es sich bei dem zu befestigenden Gegenstand um einen Kindersitz handelt. Aufgrund der starren Verbindung zum biegesteifen Sitzrahmen partizipiert ein im Kindersitz sitzendes Kind im Falle eines Unfalls direkt an der aus der Karosserieverformung resultierenden, gedämpften negativen Beschleunigung der Fahrgastzelle. Das Verletzungsrisiko wird dadurch verringert. Nachteilig ist, daß das abgenommene Sitzkissen bzw. der abgenommene Abschnitt des Sitzkissens sicher verstaut werden muß, und z.B. im Kofferraum den nutzbaren Laderaum einschränkt.

Aufgabe der vorliegenden Erfindung ist es, eine gattungsgemäße Vorrichtung zur Verfügung zu stellen, die starr mit der tragenden Struktur des Fahrzeugsitzes verbunden und leicht zu bedienen ist sowie in ihrer Ruhelage nicht stört.

Diese Aufgabe wird bei einer Vorrichtung der eingangs genannten Art mittels der aus dem Kennzeichen des Anspruchs 1 hervorgehenden Merkmale gelöst.

Bei der vorliegenden Erfindung wird die klappbare Rückenlehne gewissermaßen dazu genutzt, die aufgrund der Polsterung an sich nicht zugängliche, eine hohe Steifigkeit aufweisende, tragende Rahmenstruktur des Fahrzeugsitzes in einer zugänglichen Position oberhalb der Polsterung auf der Sitzvorderseite verfügbar zu machen. Das wird mittels der bei umgeklappter Rückenlehne durch den Spalt zwischen dieser und der Sitzfläche hindurch gegen einen sitzfesten Anschlag schwenkbaren Halterung erreicht, die eine starre Anbindung an die Rahmenstruktur des Fahrzeugsitzes darstellt. Es versteht sich von selbst, daß die Bauteile dieser Halterung so dimensioniert sind, daß die bei einem Crash auftretenden Rückhaltekräfte sicher in die Rahmenstruktur des Fahrzeugsitzes abgeleitet werden. Wenn die Halterung nicht mehr benötig wird, kann sie bei umgeklappter Rückenlehne mit einem Griff in ihre Ruhelage unter den Sitz geschwenkt werden, wo sie weder optisch noch physisch stört.

Weitere vorteilhafte Ausgestaltungen der vorliegenden Erfindung ergeben sich aus den Unteransprüchen.

Die Erfindung wird nachstehend anhand eines Ausführungsbeispieles näher erläutert. In der dazugehörigen Zeichnung zeigt:
- Fig. 1: eine perspektivische Darstellung einer erfindungsgemäßen Vorrichtung, wobei auf der linken Seite ihre Ruhelage und auf der rechten Seite ihre Gebrauchslage dargestellt ist (zum Zwecke dieser Darstellung ist die Vorrichtung in der Mitte durchgeschnitten),
- Fig. 2: eine Seitenansicht der Vorrichtung in Ruhelage mit teilweiser Darstellung von Rückenlehne, Sitz und Rahmenstruktur,
- Fig. 3: eine Darstellung gemäß Fig. 2 bei umgeklappter Rükkenlehne,
- Fig. 4: eine Darstellung gemäß Fig. 3 mit in Gebrauchslage geschwenkter Vorrichtung, und
- Fig. 5: eine Darstellung gemäß Fig. 4 mit hochgestellter Rückenlehne.

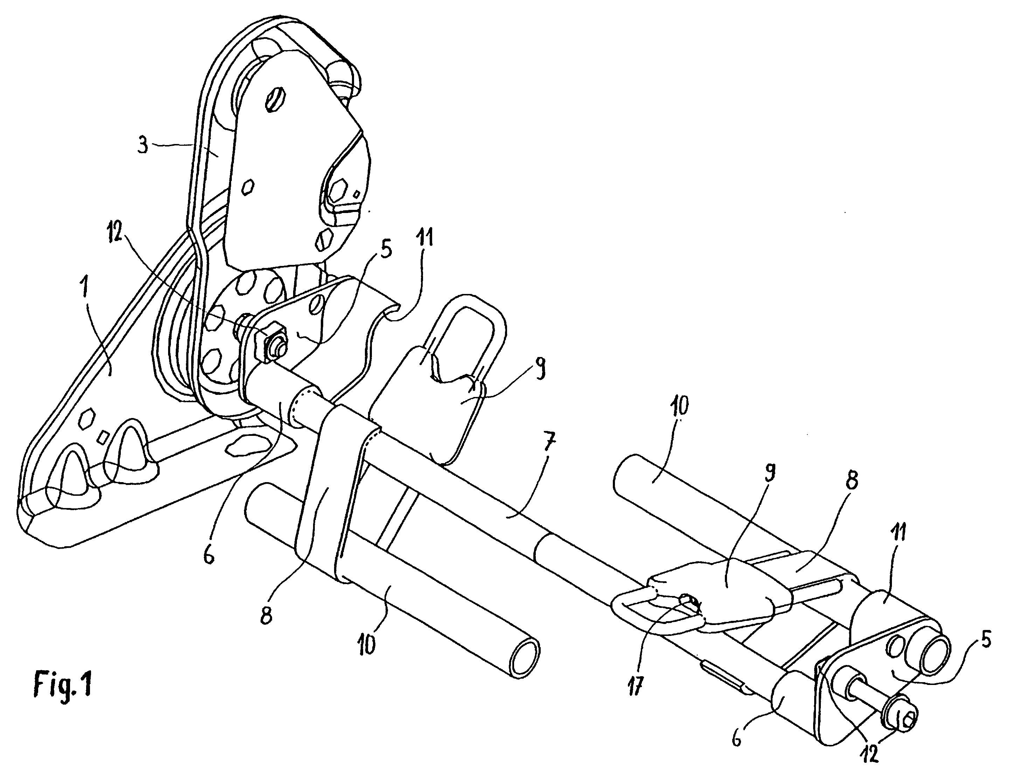

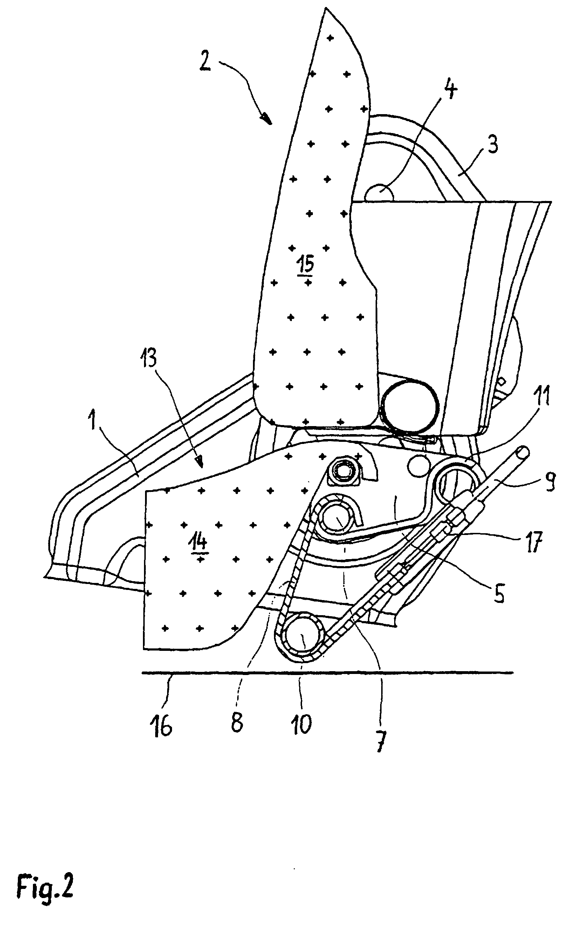

In Fig. 1 ist auf der linken Seite ein Adapter 1 zur Befestigung einer Rückenlehne 2 (siehe Figuren 2 - 5) an den nicht dargestellten Sitzrahmen gezeigt. Mit dem Adapter 1 ist eine Lehnenkonsole 3 starr verbunden, in der eine Klappachse 4 für die Rükkenlehne 2 angeordnet ist. Diese Bauteile sind symmetrisch auch auf der rechten Seite von Fig. 1 vorhanden, dort der Übersicht halber aber nicht dargestellt. Mit dem Adapter 1 und der Lehnenkonsole 3 ist beidseitig an der Innenseite eine Lagerkonsole 5 mittels einer Schraubverbindung 12 kraftschlüssig verbunden. Die Lagerkonsolen 5 sind damit sitzfest befestigt, bilden also mit dem Adapter 1 und der Lehnenkonsole 3 eine starre Einheit. Jede Lagerkonsole 5 besitzt eine Lagerbuchse 6, in denen eine Schwenkachse 7 drehbar gelagert ist. An die Schwenkachse 7 sind im Abstand voneinander zwei V-förmig gebogene Halteteile 8 an einem ihrer Enden angeschweißt. Am anderen Ende der Halteteile 8 sind Kopplungsteile 9 angeordnet und starr mit diesem verbunden. In den Zwickelbereich jedes Halteteils 8 ist ein diese verbindendes Aussteifungsrohr 10 angeschweißt, welches parallel zur Schwenkachse 7 angeordnet ist. Es ist über die Halteteile 8 hinaus verlängert, so daß es in Anlage an in die Lagerkonsolen 5 integrierte starre Anschläge 11 kommen kann. Diese Position ist auf der rechten Seite von Fig. 1 gezeigt. Sie stellt die Gebrauchslage der Halteteile 8 dar. Die Ruhelage der Halteteile 8 ist auf der linken Seite von Fig. 1 gezeigt. In dieser Position ist das Aussteifungsrohr 10 z. B. in einen nicht dargestellten, am Sitzrahmen oder am Fahrzeugboden angeordneten Schnappverschluß eingerastet, so daß störende Pendelbewegungen der Befestigungsvorrichtung vermieden werden.

Aus Fig. 1 ist ersichtlich, daß die aus den Lagerkonsolen 5, dem Schwenkarm 7, den Halteteilen 8 und dem Aussteifungsrohr 10 bestehende Konstruktion sehr robust, d.h. biegesteif ist. Auf diese Konstruktion einwirkende Kräfte werden sicher über die Verschraubung 12 in den Sitzrahmen und von dort in die Bodengruppe des Fahrzeugchassis abgeleitet.

Der Gebrauch der erfindungsgemäßen Vorrichtung wird nachstehend anhand der Fig. 2 - 5 erläutert. In diesen Figuren sind die Rückenlehne 2 und der Sitz 13 nur angedeutet, ebenso deren Polsterungen 14 bzw. 15. Der Fahrzeugboden ist in diesen Figuren durch die Linie 16 symbolisiert.

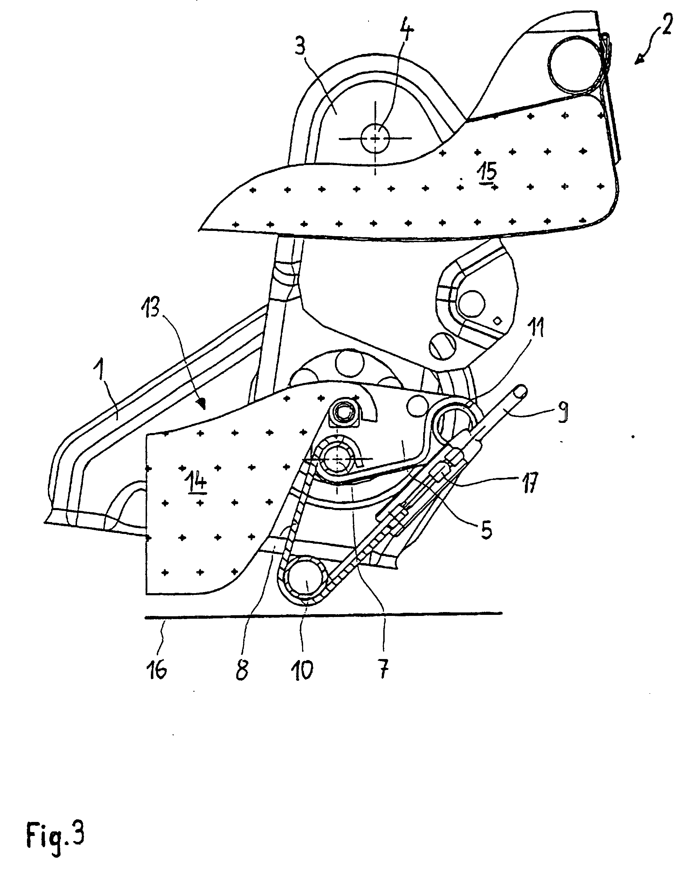

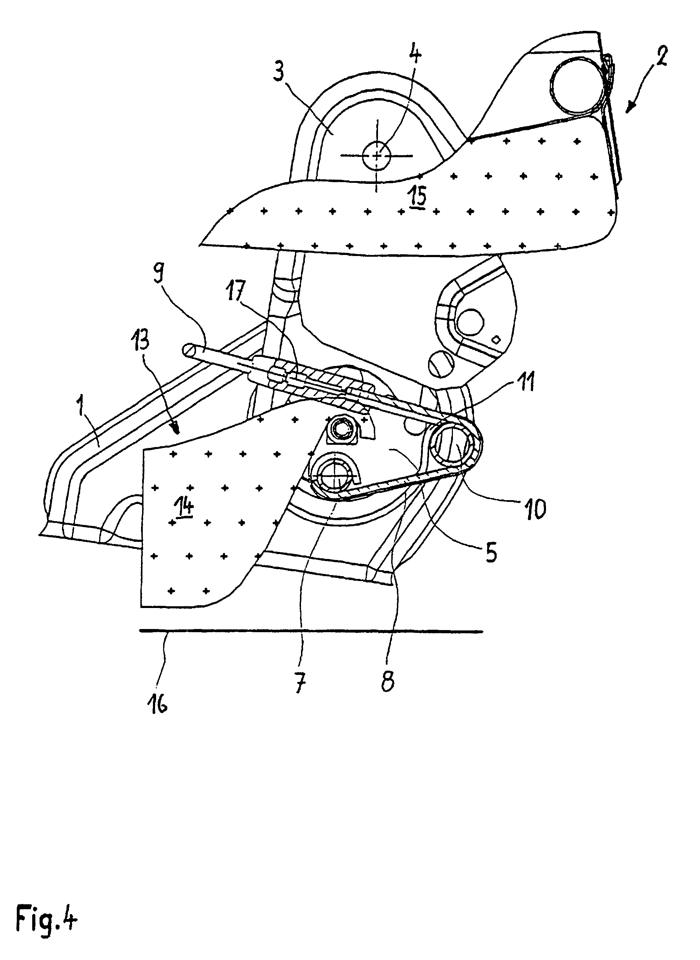

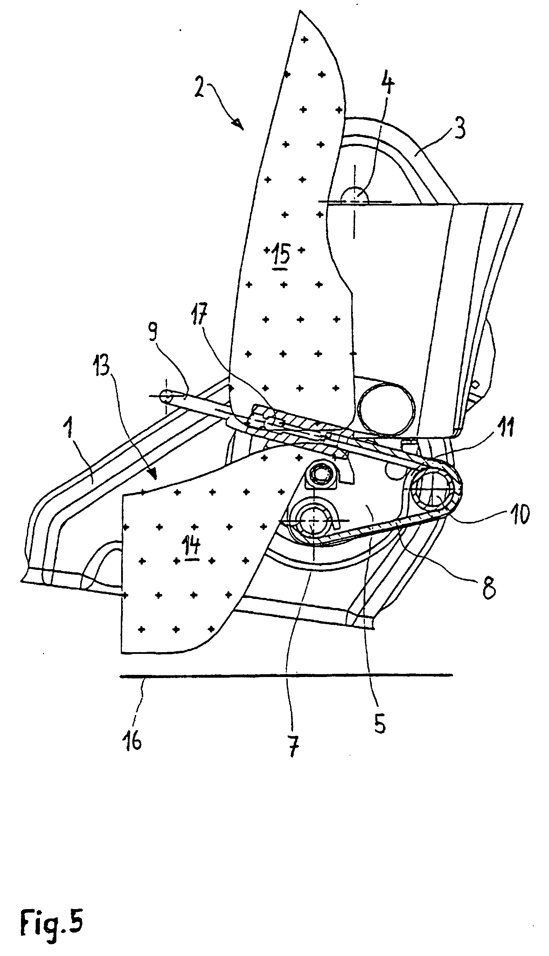

Fig. 2 zeigt die erfindungsgemäße Vorrichtung in ihrer Ruhelage. Aus dieser Darstellung ist gut zu erkennen, daß die Vorrichtung in dieser Position in dem Raum zwischen Sitz 13 und Lehne 2 und dem Fahrzeugboden 16 verschwindet und daher weder optisch noch physisch stört. Um die Vorrichtung in Gebrauchslage bringen zu können, muß die Rückenlehne 2 um die Achse 4 umgeklappt werden. Diese Situation ist in Fig. 3 gezeigt. Die Vorrichtung kann nun durch den breiten Spalt zwischen der Rückenlehne 2 und dem Sitz 13 um die Schwenkachse 7 nach vorn in die in Fig. 4 dargestellte Gebrauchslage geschwenkt werden. Die Abmessungen und Schwenkradien der Halteteile 8 sind so konzipiert, daß das behinderungsfrei geschehen kann. In dieser Gebrauchslage liegt das Aussteifungsrohr 10 an seinen Enden beidseitig an den Anschlägen 11 an. Nach dem Zurückklappen der Rückenlehne 2 in ihre aufrechte Lage (Fig. 5) ist die Vorrichtung einsatzbereit.

In der in Fig. 5 gezeigten Gebrauchslage ragen die Kopplungsteile 9 durch den Spalt zwischen Rückenlehne 2 und Sitz 13 hindurch schräg nach vorn oben. Ein zu befestigender Gegenstand braucht jetzt nur noch mit seinen korrespondierenden Kopplungsteilen auf die Kopplungsteile 9 aufgeschoben werden, bis diese einrasten. Der Gegenstand ist nun starr mit der Rahmenstruktur des Fahrzeugsitzes verbunden.

Die räumliche Lage der Kopplungsteile 9 zur Sitzoberseite und zur Rückenlehnen-Vorderseite ist im Zusammenspiel mit dem zu befestigenden Gegenstand so gewählt, daß dieser Gegenstand beim Aufschieben auf die Kopplungsteile 9 in die Polsterung 14 und 15 von Sitz 13 und Rückenlehne 2 gezogen wird, und somit fest an diesen anliegt.

Die erfindungsgemäße Vorrichtung bietet Vorteile bei der Befestigung von Kindersitzen. Diese sind in aller Regel wesentlich schmaler als die Fahrzeugsitze. Durch eine entsprechende Wahl des Abstandes zwischen den Halteteilen 8 kann dem entsprochen und eine optimale Halterung des Kindersitzes erreicht werden.

Die Kopplungsteile 9 weisen integrierte Kontaktschalter 17 auf, die beim Einrasten der Kopplungsteile 9 in die korrespondierenden Kopplungsteile der Halterung des zu befestigenden Gegenstandes aktiviert werden und eine ordnungsgemäße Befestigung signalisieren. Dieses Signal kann gleichzeitig dazu benutzt werden, um z. B. die Funktion des Airbags für den durch den Gegenstand belegten Sitzplatz auszuschalten. Das ist insbesondere dann sinnvoll, wenn der Gegenstand ein Kindersitz ist, um im Crashfall eine Verletzung eines im Kindersitz sitzenden Kindes durch den Airbag zu vermeiden.

## Patentansprüche

1. Vorrichtung zur lösbaren Befestigung von Gegenständen, insbesondere von Kindersitzen, an einem Fahrzeugsitz mit klappbarer Rückenlehne (2) wobei eine erste sitzintegrierte Halterung mit einer zweiten, gegenstandintegrierten Halterung zusammenwirkt, **gekennzeichnet durch** nachstehende Merkmale:
- die erste Halterung ist starr mit einer Schwenkachse (7) verbunden, die beidseitig am Sitzrahmen unterhalb des zwischen der Rückenlehne (2) und dem Sitz (13) gebildeten Spalts gelagert ist;
- die erste Halterung ist bei umgeklappter Rückenlehne (2) **durch** den dann vergrößerten Spalt zwischen Rückenlehne (2) und Sitz (13) um die Schwenkachse (7) aus ihrer Ruhelage in ihre Gebrauchslage schwenkbar und umgekehrt;
- in Gebrauchslage ragt die erste Halterung **durch** den zwischen der aufgestellten Rückenlehne (2) und dem Sitz (13) gebildeten Spalt hindurch soweit schräg nach vorn oben, daß beim Koppeln der ersten Halterung mit der zweiten Halterung der zu befestigende Gegenstand sicher an der Rückenlehne (2) und am Sitz (13) anliegt;
- in Gebrauchslage liegt die erste Halterung an einem sitzfesten Anschlag an;
- in Ruhelage ist die erste Halterung in den Raum zwischen dem Sitz und dem Fahrzeugboden (16) geschwenkt.

2. Vorrichtung nach Anspruch 1, **dadurch gekennzeichnet, daß** die erste Halterung aus zwei im wesentlichen V-förmig gebogenen Halteteilen (8) besteht, die an ihrem einen Ende im Abstand voneinander mit der Schwenkachse (7) starr verbunden sind und an ihrem anderen Ende Kopplungsteile (9) aufweisen, die in korrespondierende Kopplungsteile der zweiten Halterung lösbar einrastbar sind.

3. Vorrichtung nach Anspruch 2, **dadurch gekennzeichnet, daß** die beiden Halteteile (8) in ihrem Zwickelbereich mit einer parallel zur Schwenkachse (7) angeordneten Aussteifung (10) starr verbunden sind, die in Gebrauchslage an einem beidseitig am Sitzrahmen befestigten Anschlag (11) anliegt.

4. Vorrichtung nach einem der vorstehenden Ansprüche 2 und 3, **dadurch gekennzeichnet, daß** die Kopplungsteile (9) der ersten Halterung Abtast-einrichtungen aufweisen, die eine ordnungsgemäße Befestigung des zu halternden Gegenstandes signalisieren.

5. Vorrichtung nach Anspruch 4, **dadurch gekennzeichnet, daß** die Abtasteinrichtungen Kontaktschalter (17) sind.

## Claims

1. Device for detachable fastening of articles, in particular of child seats, to a vehicle seat with folding backrest (2), wherein a first mount integrated with the seat interacts with a second mount integrated with the article, **characterised by** the following features:
- the first mount is rigidly joined to a pivot pin (7), which on both sides is mounted in bearings on the seat frame below the gap formed between the backrest (2) and the seat (13);
- when the backrest (2) is folded down the first mount can be pivoted about the pivot pin (7) from its rest position into its use position through the gap, which has then become larger, between backrest (2) and seat (13) and vice versa;
- in the use position the first mount extends inclined forwards and upwards through the gap formed between the upright backrest (2) and the seat (13) to such an extent that when the first mount is coupled to the second mount the article to be fastened is reliably in contact with the backrest (2) and the seat (13);
- in the use position the first mount is in contact with a stop fixed to the seat;
- in the rest position the first mount is pivoted into the space between the seat and the floor (16) of the vehicle.

2. Device according to Claim 1, **characterised in that** the first mount consists of two mount parts (8) bent into an essentially V-shape, which parts (8) at their one end are rigidly joined, some distance from each other, to the pivot pin (7) and at their other end have coupling parts (9), which can be detachably latched into corresponding coupling parts of the second mount.

3. Device according to Claim 2, **characterised in that** in the region where they fork the two mount parts (8) are rigidly joined to a stiffener (10) arranged parallel to the pivot pin (7), which stiffener (10) in the use position is in contact with a stop (11) fixed on both sides to the seat frame.

4. Device according to one of the preceding Claims 2 and 3, **characterised in that** the coupling parts (9) of the first mount have detector devices which indicate proper fastening of the article to be mounted.

5. Device according to Claim 4, **characterised in that** the detector devices are contact switches (17).

## Revendications

1. Dispositif permettant la fixation amovible d'objets, en particulier de rehausseurs pour enfants, sur un siège de véhicule automobile avec dossier (2) articulé, comprenant une première attache intégrée au siège qui concourt avec une seconde attache intégrée à l'objet, **caractérisé par** les caractéristiques ci-dessous :
- la première attache est reliée de manière rigide à un axe de pivotement (7) logé, de chaque côté du cadre du siège, sous la fente formée entre le dossier (2) et le siège (13).
- à dossier (2) rabattu, la première attache peut être pivotée hors de sa position de repos en position d'utilisation, et inversement, à travers la fente, qui est alors agrandie.
- en position d'utilisation, la première attache fait saillie à travers la fente formée entre le dossier relevé (2) et le siège (13) diagonalement vers l'avant et vers le haut, de telle manière qu'après le couplage de la première attache à la seconde attache, l'objet à fixer s'appuie de manière sûre et contre le dossier (2) et contre le siège (13).
- en position d'utilisation, la première attache s'appuie contre une butée montée fixe sur le siège.
- en position de repos, la première attache est pivotée dans l'espace entre le siège et le fond du véhicule (16).

2. Dispositif suivant la revendication 1, **caractérisé en ce que** la première attache comprend deux éléments de maintien (8) essentiellement en forma de V, qui sont relies de manière rigide, à une de leurs extrémités, avec un écart l'un par rapport à l'autre, à l'axe de pivotement (7) et qui présentent aux autres de leurs extrémités des éléments de couplage (9), qui peuvent s'enclencher de manière amovible dans des éléments de couplage correspondants de la seconde attache.

3. Dispositif suivant la revendication 2, **caractérisé en ce que** les deux éléments de maintien (8) sont, au niveau de leur pointe, reliés de manière rigide à un renfort (10) disposé parallèle à l'axe de pivotement (7), renfort qui s'appuie sur une butée (11) fixée de chaque côté sur le cadre du siège.

4. Dispositif suivant une des revendications 2 et 3, **caractérisé en ce que** les éléments de couplage (9) de la première attache présentent des éléments explorateurs qui signalent la fixation correcte de l'objet à fixer.

5. Dispositif suivant la revendication 4, **caractérisé en ce que** les éléments de sondage sont des interrupteurs (17) munis d'un voyant de contrôle.
